(19)

Europäisches
Patentamt

European
Patent Office

Office européen
des brevets

(11) **EP 2 906 404 B1**

(12) **EUROPÄISCHE PATENTSCHRIFT**

(45) Veröffentlichungstag und Bekanntmachung des
Hinweises auf die Patenterteilung:
**22.06.2016 Patentblatt 2016/25**

(51) Int Cl.:
***B29C 45/66*** *(2006.01)*      ***B29C 45/68*** *(2006.01)*
***F16H 35/00*** *(2006.01)*

(21) Anmeldenummer: **13774207.8**

(22) Anmeldetag: **10.10.2013**

(86) Internationale Anmeldenummer:
**PCT/EP2013/071192**

(87) Internationale Veröffentlichungsnummer:
**WO 2014/057050 (17.04.2014 Gazette 2014/16)**

(54) **SCHLIESSEINHEIT FÜR EINE 2-PLATTEN-SPRITZGIESSMASCHINE**

CLAMPING UNIT FOR A TWO-PLATEN INJECTION MOULDING MACHINE

UNITÉ DE FERMETURE POUR UNE MACHINE DE MOULAGE PAR INJECTION À DEUX PLATEAUX

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **11.10.2012 DE 102012109705**

(43) Veröffentlichungstag der Anmeldung:
**19.08.2015 Patentblatt 2015/34**

(73) Patentinhaber: **KraussMaffei Technologies GmbH
80997 München (DE)**

(72) Erfinder:
• **HANKE, Uwe
01454 Radeberg (DE)**

• **RADERMACHER, Tobias
01099 Dresden (DE)**
• **AMMER, Daniel
81735 München (DE)**
• **HOLZINGER, Georg
81245 München (DE)**

(74) Vertreter: **Wilhelm, Ludwig
KraussMaffei Group GmbH
- Patentabteilung TS -
Krauss-Maffei-Strasse 2
80997 München (DE)**

(56) Entgegenhaltungen:
**CH-A- 221 369          JP-A- S63 209 818
JP-A- 2012 166 523**

**Beschreibung**

Die Erfindung betrifft eine Schließeinheit für eine 2-Platten-Spritzgießmaschine nach dem Oberbegriff des Anspruchs 1.

Aus der DE 39 34 622 A1 ist ein Eilgangantrieb für die Schließeinheit einer Spritzgießmaschine in 2-Platten-Bauweise bekannt, bei dem mittels eines Linearaktuators und eines Hebelgetriebes, welches 1-endig am Maschinenfundament und anderendig an der beweglichen Werkzeugaufspannplatte angeordnet ist, zusammenwirkt. Ein derartiger Eilgangantrieb ist nicht geeignet, um ausreichend hohe Schließkräfte zu erzeugen. Hierfür sind separate Antriebsmechanismen notwendig.

Aus der DE10129339C5 ist eine 2-Platten-Spritzgießmaschine bekannt, bei der ein Schließmechanismus vorgesehen ist, der nach Art eines Schubkurbelantriebes (Figur 1 und 2 der DE10129339C5) oder nach Art eines Schubkurbelantriebes kombiniert mit einer Kurbelschwinge gemäß Figuren 3 und 4 ausgebildet ist.

Aus der JP2012-166523A ist eine Schließeinheit einer 2-Platten-Spritzgießmaschine bekannt, welche einen Antrieb nach Art eines Schubkurbelantriebes aufweist.

Üblicherweise kommen als Antriebseinrichtungen zum Aufbringen von Schließkräften einer 2-Platten-Spritzgießmaschine hydraulische Druckzylinder zum Einsatz. Bei den hydraulisch betätigten Schließeinheiten von 2-Platten-Spritzgießmaschinen sind als Nachteile die Dauerhaltbarkeit des Systems beispielsweise zu erwähnen. Es können Eilausfälle des Antriebssystems durch Einlaufen, Verschleiß von Holmen und Buchsen entstehen. Weiterhin ist ein hoher Energieverbrauch zu verzeichnen, da große Ölvolumina, die für den Schließkraftaufbau mitgeführt werden müssen, umgepumpt werden müssen.

Elektrisch betätigte Systeme mit Spindelantrieben haben Nachteile, die in der Langlebigkeit der Spindeln und der Problematik der hohen Lasten und der Schließkraft begründet liegen. Insbesondere sei hier die Belastung der Spindeln erwähnt. Um diese zu entlasten, sind aufwendige Systeme zur Umgehung des Kraftflusses über die Spindeln erforderlich.

Bei holmlosen Spritzgießmaschinen liegt der Hauptnachteil darin, dass für die Gestaltung des Maschinenrahmens, der bei derartigen Maschinen hohen Biegemomenten ausgesetzt ist, ein hoher Materialeinsatz erforderlich ist, damit die auftretenden Kräfte oder Biegemomente abgefangen werden können.

Die JP S63 209818 A zeigt eine gattungsgemäße Schließeinheit nach dem Oberbegriff des Anspruchs 1.

Die Erfindung hat sich nun zur Aufgabe gemacht, ein alternatives Antriebssystem für die Schließeinheit einer 2-Platten-Spritzgießmaschine vorzuschlagen, mit welchem die Nachteile des Standes der Technik vermieden werden.

Außerdem soll ein Mechanismus für eine Schließeinheit angegeben werden, mittels dem sich das Übertragungsverhalten des Gesamtsystems an maschinenspezifischen Anforderungen leicht anpassen lässt.

Des Weiteren soll eine Schließeinheit für eine 2-Platten-Kunststoffspritzgießmaschine angegeben werden, die einen optimierten, d. h. minimierten Energieverbrauch für das Schließensystem besitzt.

Weiterhin soll eine, insbesondere für Spritzgießmaschinen in 2-Platten-Bauweise besonders wichtige, sehr kompakte Bauform der Schließeinheit und somit der gesamten Spritzgießmaschine gewährleistet sein.

Eine weitere Aufgabe der Erfindung ist es, eine Schließeinheit für eine 2-Platten-Spritzgießmaschine anzugeben, welche es ermöglicht, auf die Säulen einer üblichen Schließeinheit zu verzichten, ohne dass der Kraftfluss über das Maschinengestell erfolgen muss. Aus der Lösung dieser Aufgabe resultiert im Ergebnis ein geringerer Materialaufwand für das Maschinengestell, so dass ebenso als Aufgabe der Erfindung angegeben werden kann, dass eine Schließeinheit angegeben werden soll, die einen verminderten Materialeinsatz für das Maschinengestell erfordert.

Diese Aufgaben werden erfindungsgemäß mittels einer Schließeinheit mit den Merkmalen des Anspruchs 1 gelöst. Vorteilhafte Ausführungsformen sind in den vom Anspruch 1 abhängigen Ansprüchen angegeben.

Die erfindungsgemäße Schließeinheit für eine 2-Platten-Spritzgießmaschine besitzt in üblicher Art und Weise eine erste Werkzeugaufspannplatte und eine zweite Werkzeugaufspannplatte, welche zueinander linear von einer Offenstellung in eine Geschlossenstellung und umgekehrt mittels eines Antriebs bewegbar sind. Mittels dieses Antriebs ist eine Schließkraft zum Zuhalten eines Spritzgießwerkzeuges auf die Werkzeugaufspannplatten aufbringbar. Die Erfindung zeichnet sich dadurch aus, dass der Antrieb ein Getriebe aufweist, welches Mittel zum Erzeugen einer epizykloidischen, hypozykloidischen oder zykloidischen Bahnkurve zumindest eines Gelenks bezüglich zumindest einer Werkzeugaufspannplatte besitzt. Weiterhin ist zumindest das eine Gelenk mittels zumindest einer Zug- und/oder Druckkraft übertragenden Kopplungseinrichtung mit der anderen Werkzeugaufspannplatte gekoppelt.

Weiterhin ist das Getriebe, welches die Mittel zum Erzeugen einer epizykloidischen, hypozykloidischen oder zykloidischen Bahnkurve aufweist, zusammen mit der zug- und druckkraftübertragenden Kopplungseinrichtung nach Art eines Räderkoppelgetriebes ausgebildet.

Erfindungsgemäß wurde erkannt, dass die Antriebsbewegung für das Öffnen/Schließen der Werkzeugaufspannplatten und den Schließkraftaufbau bzw. den Schließkraftabbau durch ein Getriebesystem realisierbar ist. Der Aufbau dieses Getriebesystems entspricht einem Räderkoppelgetriebe mit schiebendem Abtriebsglied, welches zwei Extremlagen besitzt. Das Getriebesystem besitzt eine innere und eine äußere Umkehrlage, wobei zwischen der Umkehrlage und den Getriebeabmessungen in Richtung einer Schubachse ein direkter Zusammenhang hinsichtlich der Getriebebaulänge besteht. In einer äußeren Totlage ist die Getriebelänge maximal und in einer inneren Totlage minimal. Die Totlagen können bei entsprechenden Gliedabmessungen auch als Umkehrlagen mit Rast, d. h. dass in dieser Umkehrlage die Momentangeschwindigkeit V=0 ist und die Momentanbeschleunigung a=0 ist, ausgeführt werden. Derartige Getriebesysteme sind im Wesentlichen in zwei Bauweisen unterscheidbar. Bei der ersten Bauweise ist die Anordnung der Schubgeraden zentrisch. Bei der zweiten Bauweise ist die Anordnung der Schubge- raden exzentrisch. Diese Getriebebauarten unterschei- den sich im Wesentlichen im Kraftfluss und der Anzahl belasteter Glieder.

Der Einsatz solcher Räderkoppelgetriebe, insbesondere dann, wenn die innere Totlage zur Krafterzeugung für die Schließkraft ausgenutzt wird, ermöglicht eine Realisierung von 2-Platten-Schließeinheiten, welche in sehr kompakter Bauform ausgeführt werden können. Dies liegt daran, dass in der inneren Totlage bei solchen Räderkoppelgetrieben die wesentlichen Getriebeglieder auf Zug belastet sind. Dies ermöglicht es auch, dass die zugbeanspruchten Glieder der Schließeinheit die Funktion der bei Schließeinheiten gemäß dem Stand der Technik vorhandnen zugbeanspruchten Säulen übernehmen können, so dass hierdurch eine holmlose Schließeinheit realisierbar ist, bei der keine Notwendigkeit besteht, den Kraftfluss des Gesamtsystems über dem Maschinenrahmen abzufangen. Vielmehr übernehmen die zugbeanspruchten Getriebeglieder die Funktion der Säulen einer säulengeführten 2-Platten- Spritzgießmaschine. Die Ausgestaltung dieser Räderkoppelgetriebe kann über fünf und mehr Glieder erfolgen.

Gemäß einer weiteren Ausführungsform der Erfindung ist die erste Werkzeugaufspannplatte bezüglich der Spritzgießmaschine ortsfest und die zweite Werkzeugaufspannplatte bezüglich der Spritzgießmaschine linear verschiebbar angeordnet, wobei die Mittel zum Erzeugen einer epizykloidischen, hypozykloidischen oder zykloidischen Bahnkurve des zumindest einen Gelenks bezüglich der festen Werkzeugaufspannplatte oder der beweglichen Werkzeugaufspannplatte ortsfest angeordnet sind. Beide Varianten sind ohne Weiteres realisierbar und erlauben eine optimale Anpassung an die übrigen maschinellen Gegebenheiten.

Eine andere Ausführungsform der erfindungsgemäßen Schließeinheit zeichnet sich dadurch aus, dass die zug- und/oder druckkraftübertragende Kopplungseinrichtung sich zwischen dem Gelenk und der an- deren Werkzeugaufspannplatte erstreckt und zusam- men mit der anderen Werkzeugaufspannplatte nach Art eines Schubzweischlages ausgebildet ist.

In einer Weiterbildung besitzt das Räderkoppelgetriebe eine innere und eine äußere Totlage, wobei sich das Räderkoppelgetriebe zum Schließkraftaufbau im Bereich der inneren Totlage befindet. In dieser Position ist das Räderkoppelgetriebe maximal gefaltet und besitzt den geringsten Bauraum. Das Räderkoppelgetriebe befindet sich in einer Offenstellung der Werkzeugaufspannplatten in einer gestreckten, d. h. entfalteten Position.

Das Getriebe kann zusammen mit der zug- und/oder druckkraftübertragenden Kopplungseinrichtung eine Schubgerade aufweisen, die eine zentrische oder eine exzentrische Anordnung besitzt. Bei einer zentrischen Anordnung befindet sich die Schubgerade in den inneren und äußeren Totlagen des Getriebes in paralleler Lage zur Schließrichtung. Hierdurch gelingt es, die Mittel zum Erzeugen einer epizykloidischen, hypozykloidischen oder zykloidischen Bahnkurve des zumindest einen Gelenks in den Totlagen kraftfrei oder nahezu kraftfrei zu halten. Die erforderliche Kraftübertragung erfolgt lediglich über zug-/druckkraftbeaufschlagte Zug-/Schubstangen, von denen eine die Kopplungseinrichtung ist und die andere Schubstange Teil des Getriebes ist und an der anderen Werkzeugaufspannplatte gekoppelt ist. Eine Verzahnung zwischen einem ersten Rad und einem Hohlrad, wie es z. B. gemäß Anspruch 8 erläutert wird, bleibt dabei nahezu lastfrei. Bei einer exzentrischen Bauweise kann dies so nicht erfolgen. Alle Bestandteile des Getriebes sind in den Totlagen, insbesondere in der Totlage, in der die hohe Schließkraft aufgebaut wird, am Kraftfluss beteiligt und belastet. Allerdings bieten exzentrisch aufgebaute Räderkoppelgetriebe eine hohe Auslegungsfreiheit hinsichtlich der Übertragungsfunktion, insbesondere in den Endbereichen der Verfahrwege der Werkzeugaufspannplatte, d. h. in der inneren und äußeren Totlage. Es gilt somit hier in Abhängigkeit der maschinenspezifischen Anforderungen eine Auswahl der beiden grundlegenden Getriebeaufbauweisen (exzentrischer oder zentrischer Art) fachmännisch vorzunehmen.

Als besondere Ausführungsform der Erfindung ist vorgesehen, dass das Getriebe zur Erzeugung einer hypozykloidischen Bahnkurve des Gelenks derart ausgebildet ist, dass das Gelenk auf einem ersten Zahnrad sitzt, welches mit einem Hohlrad kämmt.

Weitere derartige denkbare Ausführungsformen sind in Anspruch 15 angegeben, wobei zur Erzeugung der hypozykloidischen Bahnkurve das Gelenk auf einem ersten Rad sitzt, welches mittels eines Riemenrad-, Kettenrad- oder Bandgetriebes zur Erzeugung einer konstanten Übersetzung zusammenwirkt oder Teil desselben ist. Grundsätzlich muss das Gelenk auf einem Getriebeglied sitzen, welches die Erzeugung einer epizykloidischen, hypozykloidischen oder zykloidischen Bahnkurve ermöglicht, wie jedoch dieses Getriebeglied auf dem das Gelenk sitzt, angetrieben ist, ist innerhalb bekannter Antriebsgetriebebauarten wählbar und für den Einzelfall fachmännisch auszuwählen. Als besonders bevorzugt hat sich jedoch die Ausbildung nach Art eines Planetengetriebes mit einem Zahnrad und einem Hohlrad herausgestellt.

Zur Anpassung der erzielbaren Übertragungsfunktionen kann vorgesehen werden, dass das Gelenk auf einem festen Ausleger des Zahnrades/Rades oder eines Zahnradsegments (Radsegments) sitzt, welches mit einem gestellfesten Zahnrad/Rad oder Zahnradsegment/Radsegment kämmt oder mit diesem zusammen zusammenwirkt.

Das erste Rad/Zahnrad kann mittels einer Kurbel, welche um ein gestellfestes Gelenk drehbar ist, angetrieben sein, wobei das gestellfeste Gelenk auf der Schubgeraden liegt, so dass ein zentrisches Räderkoppelgetriebe ausgebildet ist.

Außerdem kann das gestellfeste Gelenk nicht auf der Schubgeraden liegen, so dass ein exzentrisches Räderkoppelgetriebe ausgebildet ist.

Weiterhin kann das erste Zahnrad mit einer gestellfesten Zahnstange kämmen und mittels eines Linearantriebs antreibbar sein, wodurch insbesondere die Realisierung einer zykloidischen Bahnkurve möglich ist. Liegt das Gelenk auf einem festen Ausleger eines Zahnrads oder Zahnradsegments, welche gegenüber dem Teilkreisradius des Zahnrads oder Zahnradsegments länger ist, so gelangt die Erzeugung einer epizykloidischen Bahnkurve des Gelenks. Sitzt das Gelenk an einer Stelle bezüglich des Rades/Zahnrades, welche vom Drehpunkt des Zahnrades/Rades weniger entfernt ist als der Teilkreisradius/Radius des Zahnrades/Rades, so entsteht eine hypozykloidische Bewegung des Gelenks.

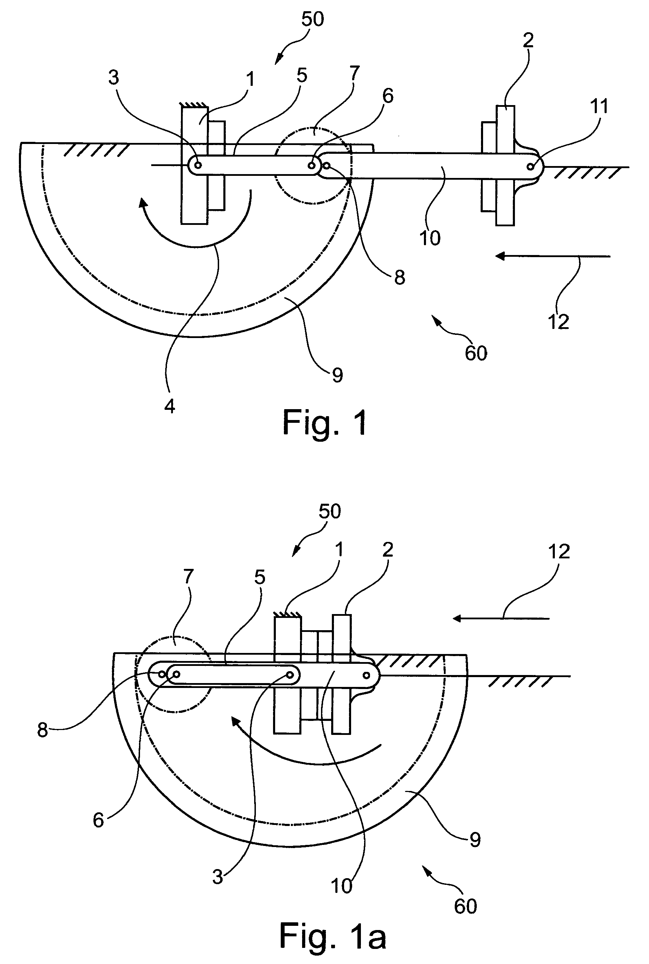

Im Folgenden wird die Erfindung anhand der Figuren 1 bis 10 beispielhaft näher erläutert. Es zeigen:

Figur 1　　eine erste Ausführungsform der erfindungsgemäßen Schließeinheit in geöffneter Lage mit einem Getriebe in gestreckter Lage, wobei das Getriebe zentrisch ausgebildet ist und das Gelenk eine hypozykloide Bahnkurve beschreibt;

Figur 1a　　schematisch die Schließeinheit gemäß Figur 1 in einer geschlossenen Stellung der Werkzeugaufspannplatten, wobei sich das Getriebe in einer inneren gefalteten Totlage befindet;

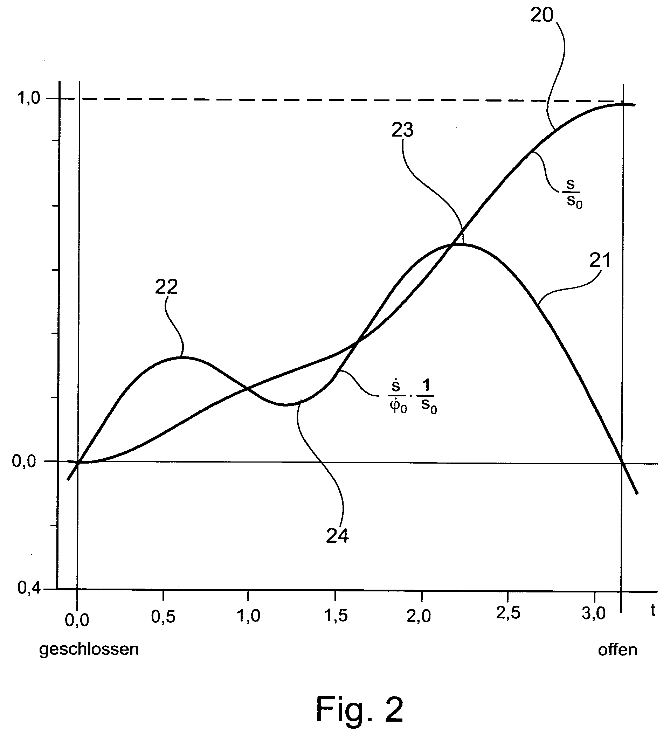

Figur 2　　die Übertragungsfunktion sowie den Verlauf der Geschwindigkeit über den Verfahrweg der Werkzeugaufspannplatten in normierter Darstellung;

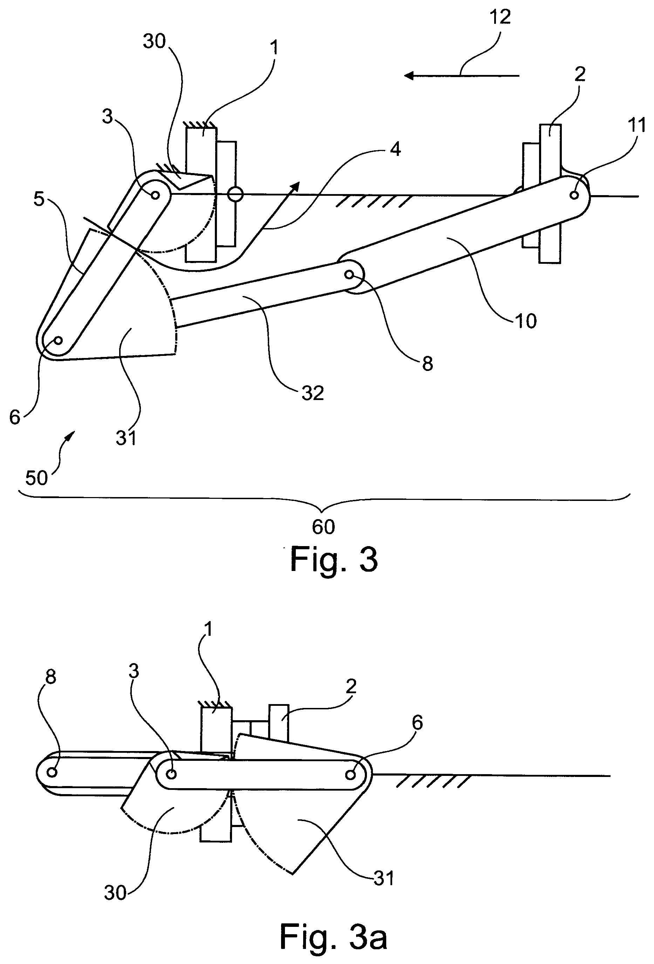

Figur 3　　eine zweite Ausführungsform der erfindungsgemäßen Schließeinheit, wobei das Getriebe derart ausgebildet ist, dass eine epizykloide Bahnkurve erzeugt wird und in den Totlagen eine zentrische Ausgestaltung vorliegt. Figur 3 zeigt diese Ausführungsform in einer entfalteten, d. h. bezüglich der Werkzeugaufspannplatten geöffneten Stellung;

Figur 3a　　zeigt das Getriebe gemäß Figur 3 in einer inneren Totlage (geschlossene Werkzeugaufspannplatten);

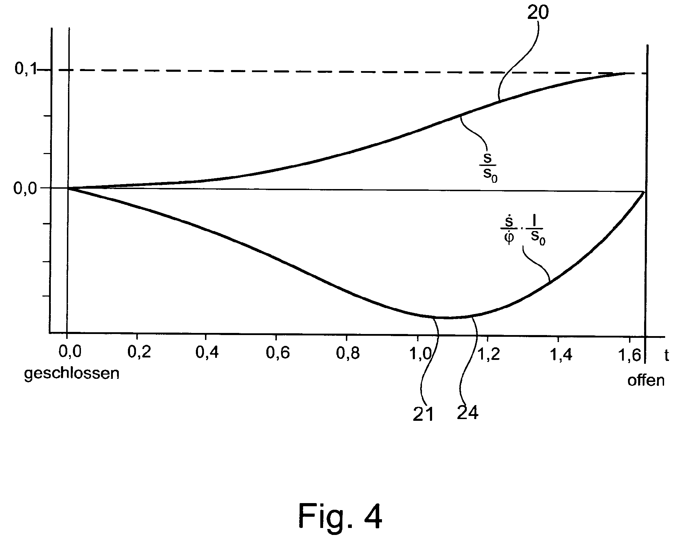

Figur 4　　zeigt die Übertragungsfunktion der Getriebe gemäß Figuren 3, 3a sowie den Verlauf der Geschwindigkeiten über den Schließweg in normierter Darstellung;

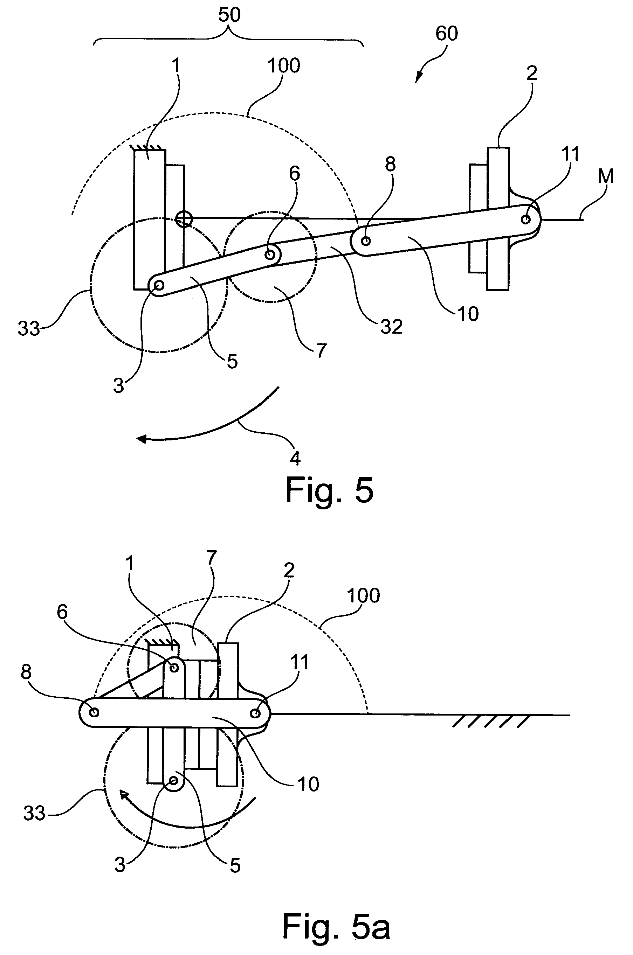

Figur 5　　zeigt eine dritte Ausführungsform der erfindungsgemäßen Schließeinheit, wobei eine epizykloidische Bahnkurve erzeugt wird und das Getriebe gemäß Figur 5 in exzentrischer Bauweise ausgeführt ist. In Figur 5 ist das Getriebe in entfalteter, d. h. bezüglich der Werkzeugaufspannplatten geöffneter Stellung angeordnet;

Figur 5a　　zeigt das Getriebe gemäß Figur 5 in geschlossener Stellung der Werkzeugaufspannplatten, was bedeutet, dass hinsichtlich des Getriebes dieses in maximal gefalteter Position (innere Totlage) vorliegt;

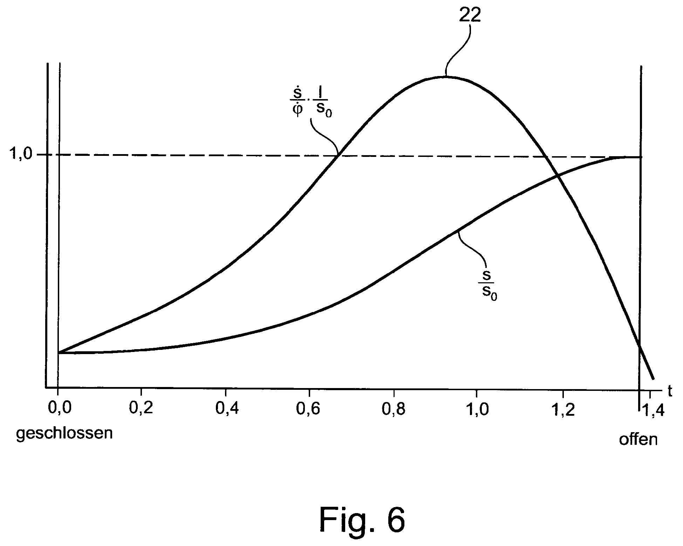

Figur 6　　zeigt die Übertragungsfunktion sowie den Geschwindigkeitsverlauf der Ausführungsform gemäß Figur 5, 5a in normierter Darstellung;

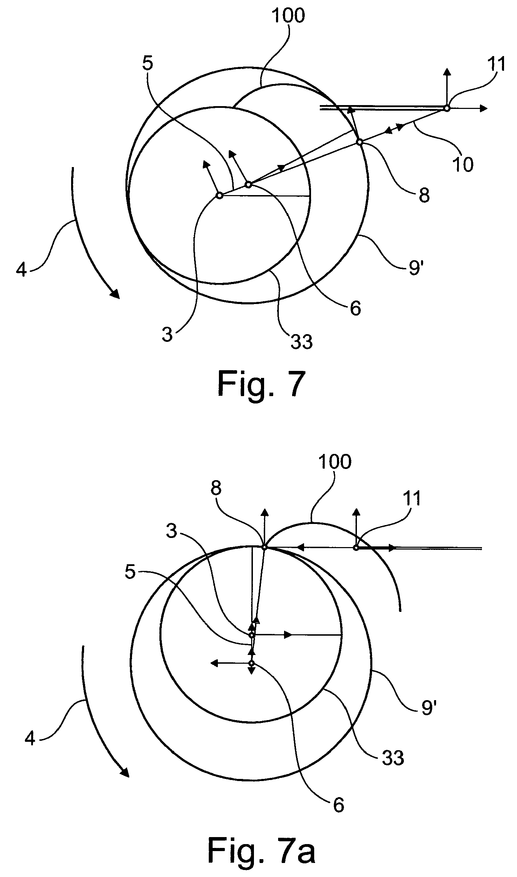

Figur 7　　zeigt eine weitere Ausführungsform eines hypozykloidisch exzentrisch aufgebauten Getriebes, wobei ein Hohlrad 9' mit einem gestellfesten Zahnrad 33 zur Erzeugung der Bahnkurve 100 Verwendung findet;

Figur 7a　　zeigt das Getriebe 50 gemäß Figur 7 in geschlossener Stellung;

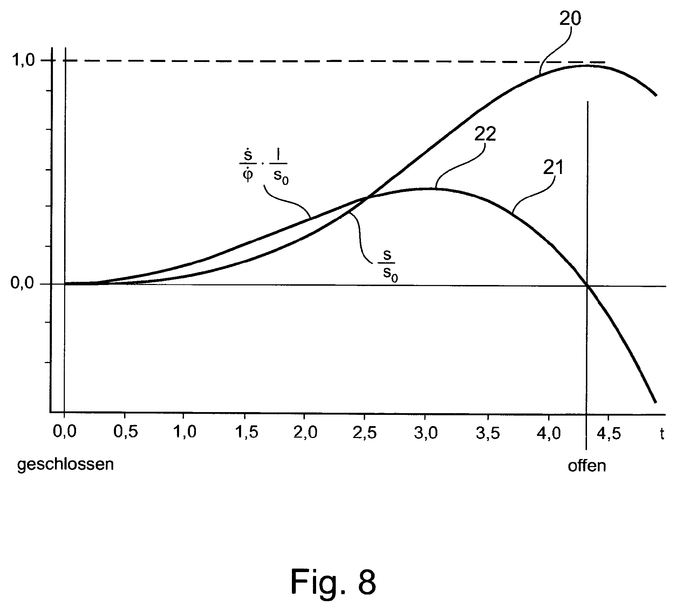

Figur 8　　zeigt die Übertragungsfunktion 20 sowie den Geschwindigkeitsverlauf 21 der Ausführungsform gemäß Figur 7, 7a in normierter Darstellung;

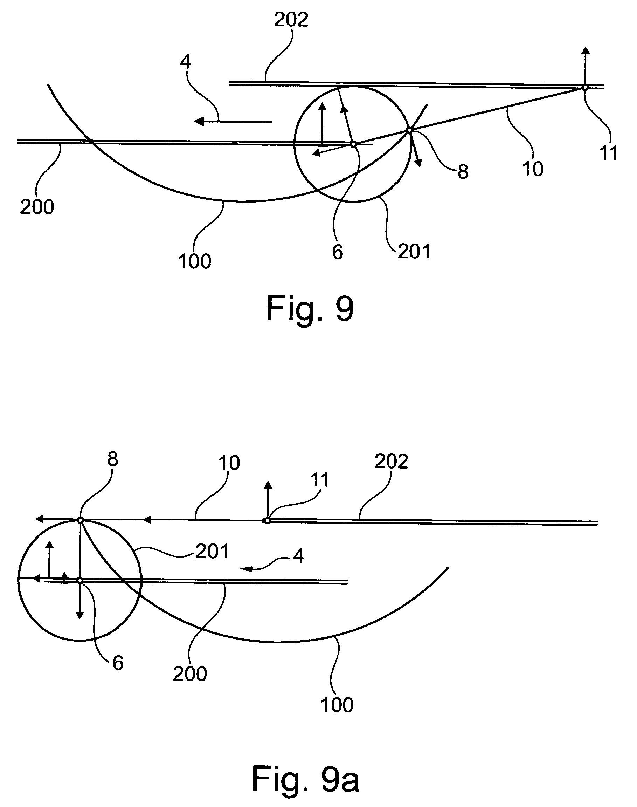

Figur 9　　zeigt eine fünfte Ausführungsform der erfindungsgemäßen Schließeinheit, wobei als Getriebe 50 ein linearangetriebenes Zahnrad, welches mit einer gestellfesten Zahnstange kämmt, zum Einsatz kommt, in geöffneter Werkzeugstellung;

Figur 9a　　zeigt das Getriebe 50 gemäß Figur 9 in geschlossener Werkzeugstellung;

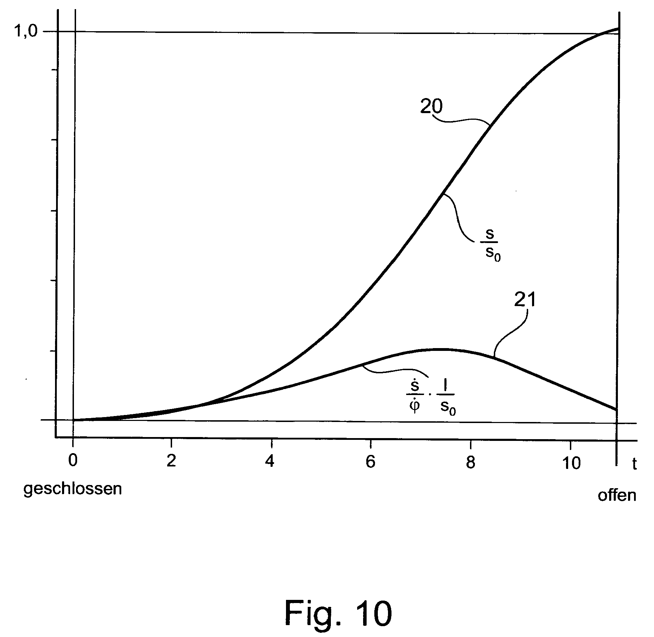

Figur 10　　zeigt die Übertragungsfunktion bzw. den Geschwindigkeitsverlauf über den Verfahrweg in normierter Darstellung (des Getriebes gemäß Figur 9, 9a);

Figur 1 zeigt eine erste Ausführungsform der erfindungsgemäßen Schließeinheit in einer festen Aufspannplatte 1 und einer beweglichen Werkzeugaufspannplatte 2 zueinander. An der festen Werkzeugaufspannplatte 1 ist um eine Antriebsachse 3 in einer Schwenkrichtung 4 antreibbar eine Kurbel 5 gelagert. Am zur Antriebsachse 3 gegenüberliegenden Ende der Kurbel 5 ist um eine Drehachse 6 ein außenverzahntes Zahnrad 7 drehbar gelagert. Innerhalb des Teilkreisdurchmessers des Zahnrads 7 ist das Gelenk 8 am Zahnrad 7 befestigt. Das Zahnrad 7 kämmt mit einem Hohlrad 9, welches gestellfest bzw. relativ zur festen Aufspannplatte 1 ortsfest gelagert ist. Im Gelenk 8 greift die Kopplungseinrichtung 10 an und ist in einem weiteren Lagergelenk 11 bezüglich der beweglichen Werkzeugaufspannplatte 2 mit dieser gekoppelt.

Bei der Ausführungsform gemäß Figur 1 bilden die Antriebsachse 3, die Kurbel 5, die Drehachse 6, das Zahnrad 7, das Gelenk 8, das Hohlrad 9, die Kopplungseinrichtung 10 sowie das Lagergelenk 11 den Antrieb 60 der Schließeinheit. Die Antriebsachse 3, die Kurbel 5, die Drehachse 6, das Zahnrad 7, das Gelenk 8 und das Hohlrad 9 bilden das Getriebe 50 zur Erzeugung der epizykloidischen, hypozykloidischen oder zykloidischen Bahnkurve des Gelenks 8. Das Getriebe 50 stellt somit eine Untereinheit des Antriebs 60 dar, wobei die Kopplungseinrichtung 10 mit dessen Lagergelenk 11 an der zweiten Werkzeugaufspannplatte 2 nicht zum Getriebe 50 gezählt werden. Dies gilt auch für die nachfolgend beschriebenen etwas anders ausgeführten Ausführungsbeispiele der Erfindung.

Wird nun die Kurbel 5 entlang der Schwenkrichtung 4 angetrieben, nimmt diese das Zahnrad 7 mit, welches mit dem Hohlrad 9 kämmt, so dass das Gelenk 8 eine hypozykloidische Bahnkurve entlang der Schwenkrichtung 4 beschreibt. Das Zahnrad 7 und das Hohlrad 9 sind dabei mittels einer festen vorbestimmten Übersetzung gekoppelt. Dieser hypozykloidische Bahnkurve folgend wird das Kopplungselement 10 betätigt, welches über das Lagergelenk 11 eine Linearbewegung in einer Schließrichtung 12 auf die bewegliche Aufspannplatte 2 überträgt. Die Ausführungsform gemäß Fig. 1 ist in sogenannter zentrischer Bauform ausgebildet, da in der in Fig. 1 gezeigten gestreckten Lage des Getriebes 50 alle Gelenkpunkte 3, 6, 8, 11 auf einer Geraden liegen. Die Schließeinheit gemäß Fig. 1 befindet sich in der dort gezeigten Stellung in der maximal entfalteten, d. h. maximal gestreckten, Lage.

Dem gegenüber ist in Fig. 1a die Schließeinheit gemäß Fig. 1 in maximal gefalteter Lage gezeigt, wobei die feste Werkzeugaufspannplatte 1 und die bewegliche Werkzeugaufspannplatte 2 in Schließrichtung 12 aufeinander zubewegt angeordnet sind und in dieser Stellung der Schließkraftaufbau durch das Getriebe 50 und die Kopplungseinrichtung 10 auf die Werkzeugaufspannplatten 1, 2 aufgebracht wird. Die Kurbel 5 und die Kopplungseinrichtung 10 sind in Fig. 2 in überlappender Stellung dargestellt. In dieser Stellung ist die minimale Baulänge der Schließeinheit erreicht, da sich die Schließeinheit in der inneren Totlage befindet. Zum Öffnen des Werkzeuges bestehend aus der festen Werkzeugaufspannplatte 1 und er beweglichen Werkzeugaufspannplatte 2 wird die Kurbel 5 entgegen der Schwenkrichtung 4 um die Antriebsachse 3 angetrieben, wobei das Zahnrad 7 wiederum gegenläufig im Hohlrad 9 kämmt und die Kopplungseinrichtung 10 im Gelenk 8 mittels einer hypozykloidischen Bahnkurve ansteuert. Die Kopplungseinrichtung 10 überträgt diese Bewegung in Form einer Linearbewegung entgegen der Schließrichtung 12 auf die bewegliche Werkzeugaufspannplatte 2.

Figur 2 zeigt die Übertragungsfunktion 20 $(\frac{s}{s_0})$ in normierter Darstellung sowie den Verlauf der Geschwindigkeit $\frac{\dot{s}}{\dot{\varphi}} \cdot \frac{1}{s_0}$ in normierter Darstellung. Dieser Geschwindigkeitsverlauf 21 weist ein erstes Geschwindigkeitsmaximum 22 und ein zweites Geschwindigkeitsmaximum 23 sowie innerhalb des Verfahrweges ein Geschwindigkeitsminimum 24 auf. Das bedeutet, dass auf eine erste Beschleunigung der beweglichen Werkzeugaufspannplatte 2 zunächst eine Abbremsung erfolgt, um dann wiederum mittels einer positiven Beschleunigung das zweite Geschwindigkeitsmaximum 24 zu erreichen. Diesem anschließend wirkt wiederum eine Bremsbeschleunigung auf die bewegliche Werkzeugaufspannplatte 2 ein, die die Werkzeugaufspannplatte auf v = 0 abbremst.

In Figur 3 ist eine weitere Ausführungsform der erfindungsgemäßen Schließeinheit unter Verwendung eines Räderkoppelgetriebes dargestellt. Bei dieser Ausführungsform ist bezüglich der festen Werkzeugaufspannplatte 1 ein gegenüber dieser fest angeordnetes außenverzahntes Zahnradsegment 30 vorhanden. Die Antriebsachse 3 ist im Mittelpunkt des Zahnradsegments 30 gesehen bezüglich der Verzahnung des Zahnradsegments 30 angeordnet. Die Kurbel 5 ist in Schwenkrichtung 4 antreibbar gelagert. Die Kurbel 5 ist mit einem zweiten Zahnradsegment 31 über die Drehachse 6 gekoppelt. Das Gelenk 8 sitzt außerhalb des Teilkreisradius des zweiten Zahnradsegments 31, so dass das Gelenk 8 eine epizykloidische Bahnkurve beschreibt, wenn über die Kurbel 5 angetrieben das zweite Zahnradsegment 31 mit dem ersten Zahnradsegment 30 (beide außenverzahnt) kämmten. Das zweite Zahnradsegment 31 weist einen Ausleger 32 auf, welcher fest mit dem zweiten Zahnradsegment 31 verbunden ist. Der Ausleger 32 besitzt im Bereich seines freien Endes das Gelenk 8. Somit befindet sich das Gelenk 8 außerhalb des Teilkreisradius des Zahnradsegments 31, so dass das Gelenk 8 eine epizykloidische Bahnkurve beschreibt. Im Gelenk 8 ist wiederum die Kopplungseinrichtung 10 an das Getriebe 50 gekoppelt und anderendig mit der beweglichen Werkzeugaufspannplatte 2 gekoppelt. Wird die Kurbel 5 in Schwenkrichtung 4 angetrieben, so bewegt sich die bewegliche Werkzeugaufspannplatte 2 in Schließrichtung 12 auf die feste Werkzeugaufspannplatte 1 zu.

Diese Ausführungsform der Schließeinheit ist in Fig. 3 in geschlossener, d. h. maximal gefalteter Lage gezeigt. In dieser Lage befinden sich sämtliche Gelenke 8, 3, 6, 11 auf einer Geraden, so dass es sich in dieser Lage um einen zentrischen Getriebetyp handelt. In der offenen Stellung gemäß Fig. 3 ist das Getriebe 50 in exzentrischer Lage gezeigt. Jedoch ist die offene Stellung für die Bewertung als exzentrisches oder zentrisches Getriebe weniger relevant, da dort keine großen Kräfte wirken. In der geschlossenen Stellung gemäß Fig. 3a, in der die Schließkraft zwischen den Werkzeugaufspannplatten 1, 2 aufgebracht wird, ist dies von besonderer Wichtigkeit. Bei dem Getriebe 50 in der Stellung gemäß Fig. 3 ist die Verzahnung zwischen dem ersten Zahnradsegment 30 und dem zweiten Zahnradsegment 31 durch die zentrische Anordnung lastfrei. Die Ausführungsformen gemäß Fig. 1, 1a bzw. 3, 3a eignen sich zur Ausbildung einer säulenlosen 2-Platten-Spritzgießmaschine.

Figur 4 zeigt in normierter Darstellung die Übertragungsfunktion 20 sowie den Geschwindigkeitsverlauf 21. Hierbei fällt auf, dass der Geschwindigkeitsverlauf 21 lediglich ein Geschwindigkeitsminimum 24 besitzt und insbesondere in die geschlossenen Stellung besonders sanft, d. h. mit geringer Beschleunigung einläuft, was einen sanften und insgesamt getriebeschonenden Aufbau der Schließkraft bewirkt. Aus der offenen Werkzeugstellung heraus wird mit betragsmäßig stark steigender Geschwindigkeit die bewegliche Werkzeugaufspannplatte 2 beschleunigt und in der inneren Totlage jedoch sanft abgebremst, um zum Schließkraftaufbau einzulaufen. Insoweit stellt die Ausführungsform gemäß Fig. 3, 3a hinsichtlich des Einlaufs in die maximal gefaltete Stellung gegenüber der Ausführungsform gemäß Fig. 1, 1a eine etwas bevorzugte Ausführungsform dar. Auch finden während des Verfahrens der beweglichen Werkzeugaufspannplatte 2 keine betragsmäßigen Bremsungen (negative Beschleunigungen) der beweglichen Werkzeugaufspannplatte 2 statt.

Eine weitere Ausführungsform der erfindungsgemäßen Schließeinheit zeigen Fig. 5, 5a, wobei in Fig. 5 die Schließeinheit in geöffneter Stellung der Werkzeugaufspannplatten 1, 2, d. h. in maximal entfalteter Stellung des Getriebes 50 dargestellt ist. Die Antriebsachse 3 ist versetzt zur Mittellinie M der Werkzeugaufspannplatten 1, 2 angeordnet. Weiterhin ist die Achse 3 Mittelpunkt eines bezüglich der festen Werkzeugaufspannplatte 1 fest angeordneten außenverzahnten Zahnrades 33, welches mit dem Zahnrad 7 kämmt. Das Zahnrad 7 weist wiederum einen Ausleger 32 auf, welcher das Gelenk 8 trägt. Das Gelenk 8 beschreibt in dieser Ausführungsform eine hypozykloidische Bahnkurve 100, welche mittels der Koppeleinrichtung 10 und das Lagergelenk 11 auf die bewegliche Werkzeugaufspannplatte 2 übertragen wird. Die Kurbel 5 ist in dieser Ausführungsform in der Schwenkrichtung 4 antreibbar. In der geschlossenen Stellung dieser Ausführungsform befindet sich das Gelenk 8 am Ende der hypozykloidischen Bahnkurve 100.

Die Kurbel 5 sowie die Kopplungseinrichtung 10 stehen in einem rechten Winkel zueinander, was bewirkt, dass die Gelenkpunkte 6, 8, 11, 3 in der geschlossenen, die Schließkraft aufbringenden Stellung nicht auf einer Linie liegen, so dass es sich hierbei um ein exzentrisches Getriebe 50 handelt. Bei diesem Getriebe 50 muss die Verzahnung zwischen dem Zahnrad 33 und dem Zahnrad 7 beim Schließkraftaufbau Last aushalten.

Die Übertragungsfunktion 20 und der Geschwindigkeitsverlauf 21 dieser Bauart gemäß Fig. 5, 5a ist in Fig. 6 dargestellt. Es fällt auf, dass der Geschwindigkeitsverlauf 21 betragsmäßig lediglich ein Geschwindigkeitsmaximum 22 besitzt, wobei aus der offenen Stellung der Werkzeugaufspannplatten 1, 2 mit einer hohen Beschleunigung der beweglichen Werkzeugaufspannplatte 2 angefahren wird und ein relativ sanfter Einlauf hinsichtlich der Bremsbeschleunigung der Werkzeugaufspannplatte 2 in die geschlossene Stellung erreichbar ist.

Die Figuren 7, 7a zeigen eine weitere Ausführungsform der erfindungsgemäßen Schließeinrichtung in stark schematisierter Form. Erkennbar ist die hypozykloidische Bahnkurve 100. Die Bauart des Getriebes 50 ist exzentrisch. Die bewegliche und die feste Werkzeugaufspannplatte sind nicht gezeigt. Lediglich die Antriebsachse 3 ist dargestellt. Die Kurbel 5 ist in der Drehachse 6 mit einem Hohlrad 9' gekoppelt, welches innenverzahnt ist. Das innenverzahnte Hohlrad 9' kämmt mit einem bezüglich der festen Werkzeugaufspannplatte 1 fest angeordneten außenverzahnten Zahnrad 33. Das Hohlrad 9' trägt das Gelenk 8, welches bei einem Antrieb der Kurbel 5 in einer Antriebsrichtung 4 die hypozykloidische Bahnkurve 8 beschreibt. Das Lagergelenk 11 ist mittels der Kopplungseinrichtung 10 am Gelenk 8 angebunden. Fig. 7a zeigt das Getriebe gemäß Fig. 7 in der geschlossenen Werkzeugstellung, welche in dieser Darstellung durch die engere Anordnung der Lagergelenke 11 und des Lagers 3 zueinander ersichtlich ist.

Ausweislich der zugehörigen Übertragungsfunktion 20 bzw. des Geschwindigkeitsverlaufs 21 weist eine derartige Konstruktion der erfindungsgemäßen Schließeinheit einen besonders sanften Einlauf der beweglichen Werkzeugaufspannplatte 2 in die geschlossene Stellung auf. Dies wird ersichtlich durch den besonders flachen Verlauf des Geschwindigkeitsverlaufs 21, je näher man in die geschlossene Stellung kommt. Der Geschwindigkeitsverlauf 21 weist lediglich ein Geschwindigkeitsmaximum 22 auf. Es erfolgen keine Zwischenabbremsungen der beweglichen Werkzeugaufspannplatte 2.

Bei der Ausführungsform der erfindungsgemäßen Schließeinheit gemäß Fig. 9, 9a handelt es sich um eine Bauform, welche eine exakt zykloidische Bahnkurve 100 des Gelenks 8 erzeugt. Mittels eines Linearantriebes 200 wird ein außenverzahntes Zahnrad 201 entlang einer Zahnstange 202, welche gestellfest angeordnet ist, bewegt, wobei das Zahnrad 201 mit der Zahnstange 202 kämmt. Das Gelenk 8 sitzt genau auf dem Teilkreisradius des Zahnrades 201, so dass die Bahnkurve 100 eine exakt zykloide Raumform aufweist. Die Kopplungseinrichtung 10 ist wiederum über das Lagergelenk 11 mit der beweglichen Werkzeugaufspannplatte (nicht gezeigt) verbunden. Die feste Werkzeugaufspannplatte ist ebenfalls nicht gezeigt. Die Drehachse 6 ist in dieser Ausführungsform die Rotationsachse, um die das Zahnrad 201 sich beim Abwickeln entlang der Zahnstange 202 dreht. In Fig. 9 ist die erfindungsgemäße Schließeinheit in geöffneter, in Fig. 9a in geschlossener Position gezeigt. In geschlossener Position handelt es sich um einen exzentrischen Getriebetyp.

In Figur 10 sind die Übertragungsfunktion 20 sowie der Geschwindigkeitsverlauf 21 jeweils normiert eingetragen. Es fällt auf, dass auch diese Bauart hin zur geschlossenen Stellung der Werkzeugaufspannplatten 1, 2 einen besonders weichen und sanften Einlauf mit einer Endbeschleunigung von nahezu 0 ermöglicht. Dies ist wiederum vorteilhaft für die Auslegung der Maschinenbestandteile, da kein schlagartiges Aufeinandertreffen der Werkzeugaufspannplatten 1, 2 erfolgt.

**Bezugszeichenliste:**

| 1 | feste Werkzeugaufspannplatte |
| 2 | bewegliche Werkzeugaufspannplatte |
| 3 | Antriebsachse |
| 4 | Schwenkrichtung |
| 5 | Kurbel |
| 6 | Drehachse |
| 7 | Zahnrad |
| 8 | Gelenk |
| 9 | Hohlrad |
| 10 | Kopplungseinrichtung |
| 11 | Lagergelenk |
| 12 | Schließrichtung |
| 20 | Übertragungsfunktion |
| 21 | Geschwindigkeitsverlauf |
| 22 | erstes Geschwindigkeitsmaximum |
| 23 | zweites Geschwindigkeitsmaximum |
| 24 | Geschwindigkeitsminimum |
| 30 | erstes Zahnradsegment |
| 31 | zweites Zahnradsegment |
| 32 | Ausleger |
| 33 | Zahnrad |
| 50 | Getriebe |
| 60 | Antrieb |
| 100 | hypozykloidische Bahnkurve |
| 200 | Linearantrieb |
| 201 | Zahnrad |
| 202 | Zahnstange |

**Patentansprüche**

1. Schließeinheit für eine Zweiplattenspritzgießmaschine mit einer ersten Werkzeugaufspannplatte (1) und einer zweiten Werkzeugaufspannplatte (2), welche zueinander linear von einer Offenstellung in eine Geschlossenstellung und umgekehrt mittels eines Antriebs (60) bewegbar sind, wobei mittels des Antriebs (60) eine Schließkraft zum Zuhalten eines Spritzgießwerkzeuges auf die Werkzeugaufspannplatten (1,2) aufbringbar ist und der Antrieb (60) ein Getriebe (50) aufweist, welches Mittel zum Erzeugen einer epizykloidischen, hypozykloidischen oder zykloidischen Bahnkurve (100) zumindest eines Gelenks (8) bezüglich zumindest einer Werkzeugaufspannplatte besitzt und das zumindest ein Gelenk (8) mittels zumindest einer Zug- und Druckkraft übertragenden Kopplungseinrichtung (10) mit der anderen Werkzeugaufspannplatte (1,2) gekoppelt ist, **dadurch gekennzeichnet, dass** das Getriebe (50), welches die Mittel zum Erzeugen einer epizykloidischen, hypozykloidischen oder zykloidischen Bahnkurve (100) enthält, zusammen mit der Zug- und Druckkraft übertragenden Kopplungseinrichtung (10) nach Art eines Räderkoppelgetriebes ausgebildet ist.

2. Schließeinheit nach Anspruch 1, **dadurch gekennzeichnet, dass** die erste Werkzeugaufspannplatte (1) bezüglich der Spritzgießmaschine ortsfest und die zweite Werkzeugaufspannplatte (2) bezüglich der Spritzgießmaschine linear verschiebbar angeordnet ist, wobei die Mittel zum Erzeugen einer epizykloidischen, hypozykloidischen oder zykloidischen Bahnkurve (100) des Gelenks (8) bezüglich der festen Werkzeugaufspannplatte (1) oder der beweglichen Werkzeugaufspannplatte (2) (zweite Werkzeugaufspannplatte) ortsfest angeordnet sind.

3. Schließeinheit nach Anspruch 1 oder 2, **dadurch gekennzeichnet, dass** sich die Zug- und Druckkraft übertragende Kopplungseinrichtung (10) zwischen dem Gelenk (8) und der anderen Werkzeugaufspannplatte (1,2) erstreckt und zusammen mit der anderen Werkzeugaufspannplatte (1,2) nach Art eines Schubzweischlages ausgebildet ist.

4. Schließeinheit nach einem der vorangegangenen Ansprüche, **dadurch gekennzeichnet, dass** das Räderkoppelgetriebe eine innere und eine äußere Totlage oder Rastlage besitzt, wobei sich das Räderkoppelgetriebe zum Schließkraftaufbau im Bereich der inneren Totlage befindet.

5. Schließeinheit nach einem der vorangegangenen Ansprüche, **dadurch gekennzeichnet, dass** das Räderkoppelgetriebe eine innere und eine äußere Totlage oder Rastlage besitzt, wobei sich das Räderkoppelgetriebe in einer Offenstellung der Werkzeugaufspannplatten (1,2) zueinander in einer gestreckten, d. h. entfalteten Stellung befindet.

6. Schließeinheit nach einem der vorangegangenen Ansprüche, **dadurch gekennzeichnet, dass** das Getriebe (50) zusammen mit der Zug- und Druckkraft übertragenden Kopplungseinrichtung (10) eine Schubgerade aufweisen, die eine zentrische oder eine exzentrische Anordnung besitzt.

7. Schließeinheit nach einem der vorangegangenen Ansprüche, **dadurch gekennzeichnet, dass** zur Erzeugung einer hypozykloidischen Bahnkurve (100) des Gelenks (8) das Gelenk (8) auf einem ersten Zahnrad (7) sitzt, welches mit einem Hohlrad (9) kämmt.

8. Schließeinheit nach einem der vorangegangenen Ansprüche, **dadurch gekennzeichnet, dass** das Gelenk (8) auf einem festen Ausleger (32) des Zahnrades (7) oder eines Zahnradsegments (31) sitzt, welches mit einem gestellfesten Zahnrad (33) oder Zahnradsegment (30) kämmt.

9. Schließeinheit nach einem der vorangegangenen Ansprüche, **dadurch gekennzeichnet, dass** das erste Zahnrad (7) mittels einer Kurbel (5), welche um eine gestellfeste Antriebsachse(3) drehbar ist, antreibbar ist.

10. Schließeinheit nach einem der vorangegangenen Ansprüche, **dadurch gekennzeichnet, dass** die gestellfeste Antriebsachse (3) auf der Schubgeraden liegt, so dass ein zentrisches Räderkoppelgetriebe gebildet ist.

11. Schließeinheit nach einem der vorangegangenen Ansprüche, **dadurch gekennzeichnet, dass** die gestellfeste Antriebsachse (3) nicht auf der Schubgeraden liegt, so dass ein exzentrisches Räderkoppelgetriebe gebildet ist.

12. Schließeinheit nach einem der vorangegangenen Ansprüche, **dadurch gekennzeichnet, dass** das erste Zahnrad (7,201) mit einer gestellfesten Zahnstange (202) kämmt und mittels eines Linearantriebs (200) antreibbar ist.

13. Schließeinheit nach einem der vorangegangenen Ansprüche, **dadurch gekennzeichnet, dass** die Schließeinheit holmlos ausgebildet ist.

14. Schließeinheit nach einem der vorangegangenen Ansprüche, **dadurch gekennzeichnet, dass** das Räderkoppelgetriebe fünf oder mehr als fünf Glieder besitzt.

15. Schließeinheit nach einem der vorangegangenen Ansprüche, **dadurch gekennzeichnet, dass** zur Erzeugung der hypozykloidischen Bahnkurve (100) des Gelenks (8) das Gelenk (8) auf einem ersten Rad sitzt, welches mittels eines Riemenrad-, Kettenrad- oder Bandgetriebes zur Erzeugung einer konstanten Übersetzung zusammenwirkt oder Teil desselben ist.

**Claims**

1. A clamping unit for a two-platen injection moulding machine with a first platen (1) and a second platen (2), which are movable with respect to one another in a linear manner from an open position to a closed position and vice versa by means of a drive (60), wherein by means of the drive (60) a closing force for keeping an injection mould closed is able to be applied onto the platens (1, 2) and the drive (60) has a transmission (50) which has means for producing an epicycloid, hypocycloid or cycloid path curve (100) at least of one joint (8) with respect to at least one platen, and the at least one joint (8) is coupled to the other platen (1, 2) by means of at least one coupling device (10) transmitting tensile and compressive force, **characterized in that** the transmission (50), which contains the means for producing an epicycloid, hypocycloid or cycloid path curve (100) is constructed together with the coupling device (10), transmitting tensile and compressive force, in the manner of a wheel linkage.

2. The clamping unit according to Claim 1, **characterized in that** the first platen (1) is stationary with respect to the injection moulding machine and the second platen (2) is arranged so as to be displaceable in a linear manner with respect to the injection moulding machine, wherein the means for producing an epicycloid, hypocycloid or cycloid path curve (100) of the joint (8) are arranged in a stationary manner with respect to the fixed platen (1) or to the movable platen (2).

3. The clamping unit according to Claim 1 or 2, **characterized in that** the coupling device (10) transmitting tensile and compressive force extends between the joint (8) and the other platen (1, 2) and is constructed together with the other platen (1, 2) in the manner of a thrust double crank.

4. The clamping unit according to one of the preceding claims, **characterized in that** the wheel linkage has an inner and an outer dead centre position or detent position, wherein the wheel linkage is situated in the region of the inner dead centre position for the build-up of closing force.

**5.** The clamping unit according to one of the preceding claims, **characterized in that** the wheel linkage has an inner and an outer dead centre position or detent position, wherein the wheel linkage in an open position of the platens (1, 2) with respect to one another is situated in an extended, i.e. deployed position.

**6.** The clamping unit according to one of the preceding claims, **characterized in that** the transmission (50) together with the coupling device (10), transmitting tensile and compressive force, have a thrust line which has a centric or an eccentric arrangement.

**7.** The clamping unit according to one of the preceding claims, **characterized in that** for the production of a hypocycloid path curve (100) of the joint (8), the joint (8) sits on a first toothed wheel (7), which cogs with a hollow wheel (9).

**8.** The clamping unit according to one of the preceding claims, **characterized in that** the joint (8) sits on a fixed arm (32) of the toothed wheel (7) or of a toothed wheel segment (31), which cogs with a toothed wheel (33) or toothed wheel segment (30) arranged fixed to the frame.

**9.** The clamping unit according to one of the preceding claims, **characterized in that** the first toothed wheel (7) is able to be driven by a crank (5), which is rotatable about a drive axis (3) arranged fixed to the frame.

**10.** The clamping unit according to one of the preceding claims, **characterized in that** the drive axis (3), arranged fixed to the frame, lies on the thrust line, so that a centric wheel linkage is formed.

**11.** The clamping unit according to one of the preceding claims, **characterized in that** the drive axis (3), arranged fixed to the frame, does not lie on the thrust line, so that an eccentric wheel linkage is formed.

**12.** The clamping unit according to one of the preceding claims, **characterized in that** the first toothed wheel (7, 201) cogs with a toothed rack (202), fixed to the frame, and is able to be driven by means of a linear drive (200).

**13.** The clamping unit according to one of the preceding claims, **characterized in that** the clamping unit is constructed as to be tie-bar-less.

**14.** The clamping unit according to one of the preceding claims, **characterized in that** the wheel linkage has five or more than five links.

**15.** The clamping unit according to one of the preceding claims, **characterized in that** for the production of the hypocycloid path curve (100) of the joint (8), the joint (8) sits on a first wheel which cooperates by means of a belt pulley-, chain wheel- or belt transmission for the production of a constant gear transmission ratio, or is a part thereof.

**Revendications**

**1.** Unité de fermeture pour une machine de moulage par injection à deux plaques comprenant une première plaque de serrage d'outil (1) et une seconde plaque de serrage d'outil (2), lesquelles sont mobiles l'une par rapport à l'autre de façon linéaire, d'une position d'ouverture à une position de fermeture et inversement, au moyen d'un entraînement (60), dans lequel une force de fermeture pour retenir un outil de moulage par injection peut être appliquée aux plaques de serrage d'outil (1, 2) au moyen de l'entraînement (60), et l'entraînement (60) présente un engrenage (50), lequel possède des moyens pour produire une courbe de trajectoire (100) épicycloidique, hypocycloidique ou cycloidique d'au moins une articulation (8) par rapport à au moins une plaque de serrage d'outil, et l'au moins une articulation (8) est couplée à l'autre plaque de serrage d'outil (1, 2) par au moins un dispositif de couplage (10) transmettant une force de traction et de compression, **caractérisée en ce que** l'engrenage (50) qui contient les moyens pour produire une courbe de trajectoire (100) épicycloidique, hypocycloidique ou cycloidique, est conçu conjointement au dispositif de couplage (10) transmettant une force de traction et de compression à la manière d'une engrenage couplé de roues.

**2.** Unité de fermeture selon la revendication 1, **caractérisée en ce que** la première plaque de serrage d'outil (1) est disposée fixe par rapport à la machine de moulage par injection et la seconde plaque de serrage d'outil (2) est disposée en étant mobile de façon linéaire par rapport à la machine de moulage par injection, dans lequel les moyens pour produire une courbe de trajectoire (100) épicycloidique, hypocycloidique ou cycloidique de l'articulation (8) sont disposés fixes par rapport à la plaque de serrage d'outil (1) fixe ou à la plaque de serrage d'outil (2) mobile.

**3.** Unité de fermeture selon la revendication 1 ou 2, **caractérisée en ce que** le dispositif de couplage (10) transmettant une force de traction et de compression s'étend entre l'articulation (8) et l'autre plaque de serrage d'outil (1, 2) et est conçu conjointement avec l'autre plaque de serrage d'outil (1, 2) à la manière d'une poussée à double course.

**4.** Unité de fermeture selon l'une des revendications précédentes, **caractérisée en ce que** l'engrenage couplé de roues possède une position au point mort ou de repos intérieure et extérieure, dans lequel l'engrenage couplé de roues se trouve au niveau de la position au point mort intérieure pour l'accumulation de force de fermeture.

5. Unité de fermeture selon l'une des revendications précédentes, **caractérisée en ce que** l'engrenage couplé de roues possède une position au point mort ou de repos intérieure et extérieure, dans lequel l'engrenage couplé de roues, dans une position ouverte des plaques de serrage d'outil (1, 2), se trouve dans une position étirée c'est à dire déployée l'un par rapport à l'autre.

6. Unité de fermeture selon l'une des revendications précédentes, **caractérisée en ce que** l'engrenage (50) présente conjointement avec le dispositif de couplage (10) transmettant une force de traction et de compression, une droite de poussée qui possède un agencement centré et excentré.

7. Unité de fermeture selon l'une des revendications précédentes, **caractérisée en ce que** pour produire une courbe de trajectoire (100) hypocycloidique de l'articulation (8), l'articulation (8) repose sur une première roue dentée (7), laquelle s'engrène avec une couronne dentée (9).

8. Unité de fermeture selon l'une des revendications précédentes, **caractérisée en ce que** l'articulation (8) repose sur une potence (32) fixe de la roue dentée (7) ou d'un segment de roue dentée (31), laquelle/lequel s'engrène avec une roue dentée (33) ou un segment de roue dentée (30) fixe sur bâti.

9. Unité de fermeture selon l'une des revendications précédentes, **caractérisée en ce que** la première roue dentée (7) peut être entraînée au moyen d'une manivelle (5) qui est rotative sur un axe d'entraînement (3) fixe sur bâti.

10. Unité de fermeture selon l'une des revendications précédentes, **caractérisée en ce que** l'axe d'entraînement (3) fixe sur le bâti repose sur les droites de poussée, de sorte qu'un engrenage couplé de roues centré est formé.

11. Unité de fermeture selon l'une des revendications précédentes, **caractérisée en ce que** l'axe d'entraînement (3) fixe sur le bâti ne repose pas sur les droites de poussée, de sorte qu'un engrenage couplé de roues excentré est formé.

12. Unité de fermeture selon l'une des revendications précédentes, **caractérisée en ce que** la première roue dentée (7, 201) s'engrène avec une crémaillère (202) fixe sur le bâti et peut être entraînée au moins d'un entraînement linéaire (200).

13. Unité de fermeture selon l'une des revendications précédentes, **caractérisée en ce que** l'unité de fermeture est conçue sans barre.

14. Unité de fermeture selon l'une des revendications précédentes, **caractérisée en ce que** l'engrenage couplé de roues possède cinq ou plus que cinq éléments.

15. Unité de fermeture selon l'une des revendications précédentes, **caractérisée en ce que** pour produire la courbe de trajectoire (100) hypocycloidique de l'articulation (8), l'articulation (8) repose sur une première roue, laquelle coopère au moyen d'un engrenage à roue à courroie, à roue à chaîne ou à bande ou une partie de celui-ci, pour produire une translation constante.

**Fig. 1**

**Fig. 1a**

Fig. 2

Fig. 3

Fig. 3a

Fig. 4

Fig. 5

Fig. 5a

Fig. 6

Fig. 7

Fig. 7a

Fig. 8

Fig. 9

Fig. 9a

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3934622 A1
- DE 10129339 C5
- JP 2012166523 A
- JP 63209818 A